(19) Europäisches Patentamt
European Patent Office
Office européen des brevets

(11) **EP 2 174 556 A1**

(12) **EUROPEAN PATENT APPLICATION**

(43) Date of publication:
**14.04.2010 Bulletin 2010/15**

(51) Int Cl.:
**A23L 1/015** (2006.01)          **A23L 1/164** (2006.01)

(21) Application number: **08166394.0**

(22) Date of filing: **10.10.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicant: **Nestec S.A.**
**1800 Vevey (CH)**

(72) Inventors:
• **Bindzus, Wolfgang**
**Welwyn garden city, Hertfordshire AL7 2Q (GB)**
• **Lagrange, Joëlle**
**Welwyn garden, Hertfordshire AL72HY (GB)**

(74) Representative: **Cogniat, Eric Jean Marie**
**Nestec S.A.**
**Avenue Nestlé 55**
**1800 Vevey (CH)**

(54) **Method for reducing acrylamide**

(57)     Method for reducing the amount of asparagine in a processed whole grain composition comprising treating the composition with asparaginasc for a period of from 2 to 60 minutes at a moisture content of from 15 to 45 % by weight and a temperature of from 20 °C to 50 °C.

## Fig. 2

**Description**

**Field of the invention**

The present invention relates to a method for reducing the amount of asparagine in a processed whole grain composition in a semi-dry state, thereby lowering the amount of acrylamide formed after heating, in the composition itself or in a food product made with this composition.

**Background of the invention**

Acrylamide is regarded as a possible carcinogenic agent in humans and may cause damage to the human nervous system. A number of recent research studies support the now generally accepted theory that acrylamide is formed from free asparagine and reducing sugars, mainly through Maillard reaction pathways. In particular, it has been reported that Maillard reactions involving asparagine and methionine produce acrylamide (Mottram et al., 2002 Nature, 419, 448-449; Stadler et al., 2002 Nature, 419, 449-450). In this, the availability and accessibility of free asparagine may be a key parameter that impacts reaction rates. The acrylamide reaction is favoured by heat treatment above 110 °C in particular at low moisture content (below about 5%). Such conditions are reached in many industrial food manufacturing processes as well as in home cooking. It is known that acrylamide formation in industrial food processing can occur in processes such as the roasting of coffee, frying of potato ships, baking of various baked goods or toasting of certain breakfast cereals. Further, acrylamide formation can occur in home cooking, for example during preparation of toasted bread. In processed and home-cooked foodstuffs alike, the formation of acrylamide has become a major concern.

Breakfast cereals are manufactured from various grains and blends thereof. The grains may be used as whole kernel or dry milled to various particle size. Further dry milled grains may be used as whole grain composition or as refined dry milled product with the majority of the outer fibrous grain layers and the germ removed. Dependent upon the botanical source, growing conditions and the type of dry milling process used, cereal grain compositions may show wide differences in asparagine content.

In breakfast cereal manufacture, acrylamide may be formed to different degree dependent upon the cereal grain composition used, the formula requirements and the process conditions applied. Typically, the breakfast cereal process consists of a) cooking a grain composition in the presence of moisture and other ingredients such as sugar and flavours, b) forming the cooked dough - like product into the basic shape of the breakfast cereal, e.g. flakes, and c) subsequent drying, toasting and / or coating of the finished breakfast cereal product. In this, process conditions that expose the breakfast cereal to high temperature at low moisture content favour acrylamide formation.

It is thought that reducing the amount of asparagine in a food product prior to cooking will result in lower levels of acrylamide in the final food product. Enzymatic processes that modify a side chain of free amino acids have been described, for example the use of asparaginase to reduce asparagine to aspartic acid.

WO 2004/030468 describes a method for producing a food product involving a heating step, comprising treating of an intermediate form of the food product prior to the heating step with an enzyme that breaks down amino acids involved in the formation of acrylamide. The enzyme may be asparaginase.

WO 2005/004628 describes a method for the reduction of the acrylamide content in corn-based food products which comprises adding an asparagine-reducing enzyme to food material before heating. One example relates to the manufacture of corn flakes from refined corn grits.

WO 2004/032648 describes a method of preparing a heat treated food comprising (a) providing a raw material that comprises carbohydrate, protein and water, (b) treating the raw material with an enzyme, such as asparaginase, and (c) heat treating the material to reach a final water content below 35 % by weight. The examples therein relate to high moisture dough systems.

None of these documents recognize the challenges provided in applying an asparaginase treatment to whole grain compositions. Whole grain compositions are made from whole cereal grains and retain all parts of the whole grain including the external bran layer and the germ region as well as the endosperm. In contrast, refined grain compositions, such as white flour made wheat, retain mainly the endosperm and most of external bran layers and the germ is removed through the milling process.

Whole grains are believed to be nutritionally superior to refined grains, richer in dietary fibre, antioxidants, protein, dietary minerals (including magnesium, manganese, phosphorus, and selenium) and vitamins (including niacin, vitamin B6, and vitamin E). Manufacturers are sometimes required by law to fortify refined grain products to make up for the loss of vitamins and minerals. Approximately four times as much dietary fibre is found in whole grain compositions as compared to refined compositions made from grain and this has been shown to reduce the incidence of some forms of cancer, digestive system diseases, gum disease, coronary heart disease, diabetes, and obesity. Some of these protective effects occur because carbohydrates from whole grains are digested and enter the bloodstream more slowly. Whole grains also have numerous cardiovascular benefits.

In whole grains asparagine is primarily located in the fibre rich cells in the outer grain layers and so it is acknowledged that use of whole grains in food compositions may increase the level of asparagine, a precursor to acrylamide, in food compositions. Further, it is unknown if enzymes are able to act on this substrate because the fibre cell structure that contains the majority of the asparagine in the grain aims to protect the grain from environmental stress and so may inhibit access of the enzyme or inhibit enzyme activity. Therefore, there exists a need to develop a process to produce whole grain compositions with reduced or zero amounts of asparagine.

It is desirable to use whole grain compositions (for example whole, cracked or milled grains) in breakfast cereal manufacture. Breakfast cereal processing occurs at limited moisture content and dependent upon the type of process used, breakfast cereal cooking takes place at a moisture content of 15 to 40 % by weight. The finished product is typically dried to a moisture content of about 3 % by weight.

Enzyme treatments are typically performed in an aqueous environment. If enzyme treatments are performed at limited moisture, it is usually necessary for the treated substrate to be purified and the reaction occurs over a long processing time.

Therefore, there exists a need to develop a process to produce whole grain compositions with reduced or zero amounts of asparagine that may be carried out at low or very low moisture contents (as low as 20 %). Such procedures could be used directly in breakfast cereal processing or as treatment in dry milling operations that produce whole grain compositions.

## Summary of the invention

Surprisingly it has now been found that asparaginase can convert asparagine in whole grain compositions and advantageously this can be accomplished at limited moisture content and with short treatment times. Thus, the invention provides a method for reducing the asparagine content of processed whole grain compositions and thereby the ability to reduce acrylamide levels in heated foodstuffs containing such whole grain compositions. Accordingly, a first aspect of the invention provides a method for reducing the amount of asparagine in a whole grain composition comprising treating the composition with asparaginase for a period of from 2 to 60 minutes at a moisture content of from 15 to 45 % by weight and a temperature of from 20 °C to 50 °C. Advantageously, the low moisture conditions and short processing times allow the integration of an asparaginase treatment into numerous commercial processes, including breakfast cereals manufacture. Further, the use of low moisture conditions and short processing times ensure that other enzymes found in whole grain compositions (e.g. amylases or proteases) are not active and so no change in raw material properties is observed, that could cause unacceptable product characteristics.

A second aspect of the invention provides a method for producing a whole grain food product, for example a whole grain breakfast cereal, comprising the steps of:

(i) Providing a composition comprising processed whole grain and optionally other solid ingredients;
(ii) Treating the composition with asparaginase for a period of from 2 to 60 minutes at a moisture content of from 15 to 45 % by weight and a temperature of from 20 °C to 50 °C; and
(iii) Heating or cooking the composition.

A third aspect the invention provides a method for reducing the amount of acrylamide in a food composition comprising processed whole grains wherein the method comprises at least one heating step and further comprises treating the food composition prior to the heating step with asparaginase for a period of from 2 to 60 minutes at a moisture content of from 15 to 45 % by weight and a temperature of from 20 °C to 50 °C.

Other aspects of the invention provide whole grain compositions having an asparagine content of 0.001 % by weight or less, based on the weight of the composition, food products containing said whole grain compositions and the use of said whole grain compositions in the production of breakfast cereal, bread, cake, biscuits and other edible products. A further aspect of the invention provides a whole grain food product, for example a whole grain breakfast cereal, having an acrylamide content of 60 % or less, as compared to the same whole grain food product that has not undergone the asparaginase treatment.

## Brief description of the drawings

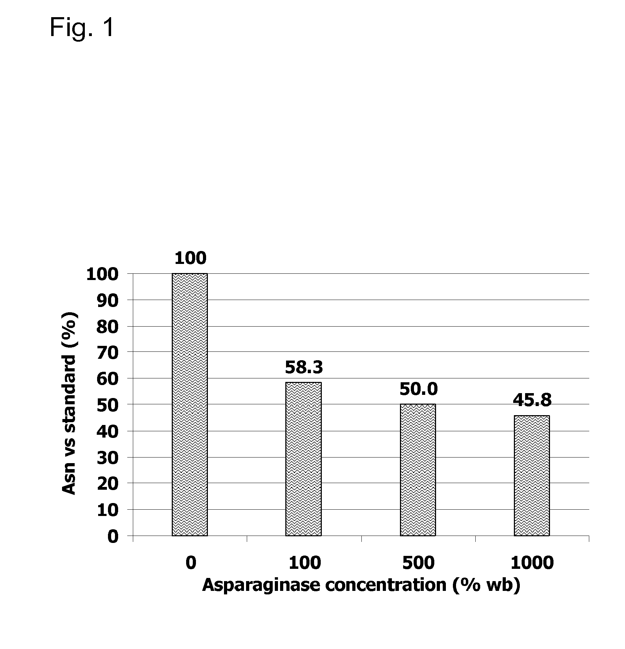

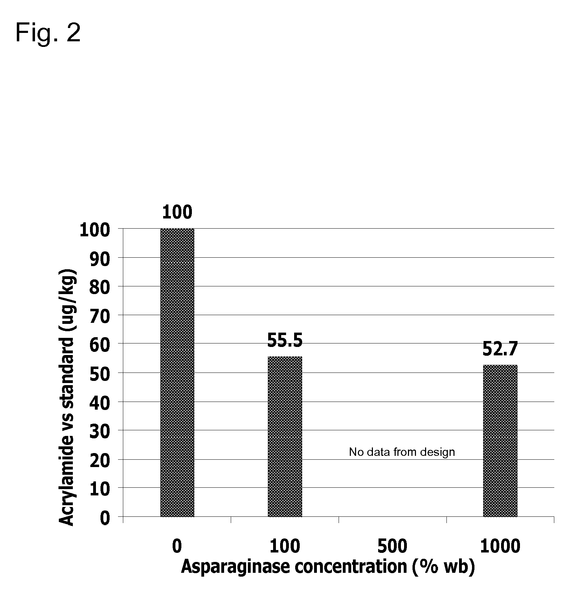

Fig. 1 is a graph showing the remaining free asparagine content (% vs. standard, standard = 100%) in cooked wheat whole grain dough after pre-treatment with asparaginase (10 min residential time using 100, 500 and 1000 ppm). Fig. 2 is a graph showing the acrylamide content ($\mu$g/kg dw) in wheat flakes without and with asparaginase treatment (100 to 1000 ppm) prior cooking.

**Detailed description of the invention**

The invention surprisingly and advantageously provides a way to apply asparaginase treatment to whole grain compositions and to achieve significant reductions in asparagine levels at limited moisture contents (semi-dry state) and with short treatment times. By providing significant reductions in asparagine levels, the invention thereby allows the production of whole grain-containing heated foodstuffs, such as breakfast cereals, with reduced acrylamide content.

It is shown herein that asparaginase treatment of whole grain compositions at a moisture level used for breakfast cereal processing successfully reduces the asparagine and acrylamide content of the composition. Advantageously, it was found that the identified treatment conditions allow for very short processing times. This may allow the enzyme treatment to be integrated into existing breakfast cereal processes for whole grain formulations without the need to process at excess moisture and/or increased processing times which could thereby change the process or product quality characteristics.

The methods are also applicable to whole grain or flour dry millers who supply milled products for use in breakfast cereals and other products. The process described is energy efficient to produce dry milled whole grain or refined milled flours at minimized asparagine content. The process is energy and process efficient because the treatment can occur at low moisture content (minimum energy needed for product drying) and short processing times (suitable for continuous operations).

As used herein the term "whole grain composition" refers to compositions comprising cereal grains that retain all compositional parts of the whole grain, including the external bran layer and the germ region as well as the endosperm. The term "processed whole grain composition" refers to compositions that are pre-processed by physical milling procedures resulting in any type of minimally or highly milled whole grain compositions included cracked-, crushed- or milled grains. Further, the term "processed whole grain composition" may refer to other treatments that enhance the use of the whole grain in food stuff such as physical treatments (pressure, shear, etc), heat treatments (cooking, heat assisted hydration), chemical treatments (soaking in alkaline or acidic environment) or enzymatic treatments (hydrolyse of bran).

The cereal grains may be selected from maize, wheat, rice, corn, barley, oats, rye, sorghum, millets, buckwheat, quinoa or any combination thereof. Most preferably the cereal grains are selected from wheat, oats, rye or barley, or combinations thereof. The whole grain composition may be minimally or highly pre-processed. It may comprise cracked whole grain, milled whole grain, dry milled whole grain flour or any other known mechanically, physically, chemically or enzymatically treated whole grain and combinations thereof. If whole grain kernels are used they should have been cooked prior to treatment or treated in another manner such that asparaginase is able to act on the asparagine contained in the fibre rich cells.

The particles of the whole grain composition may have an average particle size of from 200 $\mu$m or less (e.g. milled flour), to 0.5 to 1 mm (e.g. semolina), to 2 to 3 mm or more (e.g. cracked grain) or up to approximately 5-6 mm length / 3-4 mm diameter (e.g. whole grains).

According to the invention a whole grain composition is treated with asparaginase (EC 3.5.1.1). Asparaginase can be obtained from various sources, such as for example from plants, animals and microorganisms, such as for example Escherichia, Erwinia, Streptomyces, Pseudomonas, Aspergillus and Baccillus species. Specific examples of suitable strains include Escherichia coli, Erwinia chrysanthemi, Streptomyces lividans, Streptomyces murinus, Aspergillus oryzae, Aspergillus nidulans, Aspergillus niger, Bacillus alkalophilus, Bacillus amyloliquefaciens, Bacillus brevis, Bacillus circulans, Bacillus coagulans, Bacillus lautus, Bacillus lentus, Bacilluslicheniformis, Bacillus megateruim, Bacillus stearothemophilus, Bacillus subtilis or Bacillus thuringiensis. An example of suitable methods to yield asparaginase from Bacillus, Streptomyces, Eschera or Pseudomonas strains is described in WO 03/083043. Particularly preferred is asparaginase obtained from Aspergillus niger.

Preferably use is made of food-grade organisms, for example Aspergillus niger or Bacillus subtilis. Particularly preferred enzymes for use in accordance with the invention are enzymes which have received Generally Recognised As Safe (GRAS) notification by the Food and Drug Administration (FDA) or other equivalent body. An example of such an enzyme is PreventASe ® which is available from DSM.

The treatment with asparaginase may be carried out using asparaginase at a concentration of from 10 to 5000 ppm. The skilled person will be able to select an appropriate concentration of asparaginase based on their knowledge. Preferred concentrations may range from 50 to 2500 ppm and most preferred from 100 to 1000 ppm.

In accordance with the invention treatment of processed whole grain compositions with asparaginase is carried out under low moisture conditions. This means that the total water content of the composition to be treated is from 15 to 45 % by weight based on the total weight of the composition. Preferably the treatment is carried out at a moisture content of from 15 to 40 %, preferably from 15 to 35 %, more preferably from 20 to 30 %, and most preferably from 20 to 25 %. Thus very limited moisture contents may be used such that the composition is in a semi dry powdery state.

Alternatively, the moisture content may be selected based on the whole grain composition and any prior or subsequent processing steps. For example if the process is being applied to a whole grain food product, such as a breakfast cereal composition, then it may be preferable to use the moisture content of the composition at the stage when it is desired to apply the asparaginase treatment. In that way, fewer changes to current processing procedures may be required. The most preferable moisture content range may vary depending on the type of food product or breakfast cereal and the applied process conditions. This acknowledges that different food products or breakfast cereal types may require different levels of moisture during processing to develop best possible eating quality. Accordingly the preferred moisture content may depend on the whole grain composition, but could be determined by one of skill in the art.

Alternatively, if the process is being applied to a whole grain composition during or after dry milling, the moisture content may be selected based on the appropriate moisture content for the respective processing step. For example, if the asparaginase treatment is applied after dry-milling and prior to a heat-moisture treatment step designed to stabilize whole grain compositions, the moisture content may be equivalent to the moisture used for the stabilization treatment. In this type of process, the moisture content may be 20 to 40 %. With such an approach, one could envisage a continuous process that, in a first process step, produces the dry milled whole grain composition, in a second process step, increases the moisture content and performs the asparaginase treatment in accordance with the present invention and, in a third process step, raises the process temperature to perform the heat-moisture treatment to produce a stabilized and subsequently dried whole grain composition with reduced or low asparagine content.

In accordance with the invention treatment with asparaginase is carried out at a temperature of from 20 °C to 50 °C. The treatment may suitably be carried out at a temperature of from 25 to 45 °C, or from 30 to 40 °C, or from 35 to 40 °C.

In accordance with the invention treatment with asparaginase is carried out for a period of from 2 to 60 minutes. Preferably the treatment time is from 5 to 50 minutes, more preferably from 10 to 40 minutes, more preferably from 10 to 30 minutes, and most preferably from 10 to 20 minutes. Short treatment times provide particular advantages in terms of allowing continuous processing operations. Further, short processing times may avoid risks associated with holding a product for a long time at a moisture content and temperature that is suitable for asparaginase activity, as this may also allow for significant activity of other enzymes that are naturally present in grains. This may cause, for example, undesirable breakdown of starch by amylase enzymes and subsequently negative effects on product quality.

Further, in accordance with this invention, one may apply any treatment known to one skilled in the art that a) may further enhance the distribution of the asparaginase in the treated processed whole grain composition, b) that may further enhance penetration of the enzyme into the processed whole grain composition or c) that may further enhance the release of asparagine from the processed whole grain compositions. Examples of such methods are any type of appropriate mixing to achieve suitable distribution and uniformity, the application of vacuum or pressure including processing at super critical pressure to enhance penetration of the enzyme into the substrate, or the selective use of enzymes with appropriate activity that can act on the substrate and either enhance penetration of asparaginase into the substrate or release of asparagine from the substrate. One skilled in the art may select any other mechanical, thermal, chemical or enzymatic methods that achieve the effects as described above.

The method of the invention may result in a reduction in the asparagine content of the whole grain composition of at least 10 % or more preferably at least 20 %, 30 %, 40 %, 50 %, 60 %, 70 %, 80 %, 90 % , 95 % or 99 %, as compared to the same whole grain composition that has not undergone the asparaginase treatment.

The whole grain composition produced by the method of the invention may be used as an ingredient for food products that are subsequently cooked or heat treated in any way.

By using a composition (ingredient) produced by the method of the invention the resulting food product will have lower levels of acrylamide after cooking than a food product made with an ingredient not treated by the method of the invention. For example, milled whole grain flour, such as whole grain wheat flour, may be treated in accordance with the invention to produce flour having lower levels of asparagine than untreated whole grain wheat flour. The treated whole grain flour may be used in place of untreated whole grain flour in the production of various food products, for example breakfast cereals, cereal bars, granola bars, porridge, pap, infant cereals, biscuits, pastry and bakery products such as bread, cake and biscuits, pasta, cereal-based beverages and many other food products, or pet food.

Alternatively the method of the invention may be included in the production of a food product prior to the heating of the product to a temperature that will induce acrylamide formation, i.e. above about 110 °C or higher. For example, the method of the invention may be applied in the production of whole grain food products, or in the production of ingredients used in foods products, such as breakfast cereals, cereal bars, granola bars, porridge, pap, infant cereals, biscuits, pastry and bakery products such as bread, cake and biscuits, pasta, cereal-based beverages and many other food products, or pet food.

Thus, according to a further aspect the invention provides a method for producing a whole grain food product, for example a whole grain breakfast cereal, comprising the steps of:

(i) Providing a composition comprising processed whole grain and optionally other solid ingredients;
(ii) Treating the composition with asparaginase for a period of from 2 to 60 minutes at a moisture content of from 15 to 45 % by weight and a temperature of from 20 °C to 50 °C; and
(iii) Heating or cooking the composition.

In particular, the invention provides a method for producing a whole grain breakfast cereal comprising the steps of:

(i) Providing a composition comprising processed whole grain and optionally other solid ingredients;
(ii) Mixing liquid into the composition of step (i) to achieve a moisture content of from 15 to 45 % by weight;
(iii) Cooking the composition;
(iv) Forming the composition into pieces;
(v) Drying and toasting the pieces;
(vi) Optionally coating the pieces, for example with sugar, honey, nuts, yoghurt or combinations thereof;
wherein the method further comprises:
(vii) Treating the composition with asparaginase for a period of from 2 to 60 minutes at a moisture content of from 15 to 45 % by weight and a temperature of from 20 °C to 50 °C;
and wherein step (vii) is carried out prior to step (v) and preferably between steps (ii) and (iii).

The processed whole grain composition may comprise mechanically treated or milled whole grain flour or other whole or dry milled grain products such as cracked grains or grains milled to a smaller particle size, as previously described. Other components of breakfast cereals are well known to those skilled in the art and may include sugar, sugar syrups, honey, flavouring, salt and other additions such as nuts or fruits.

During the production of a breakfast cereal, cooking step (iii) may comprise cooking the composition under steam pressure (moisture content approximately 30 %) at a temperature of 110-120 °C. Although acrylamides may form during this step it has been found that most acrylamide formation occurs during the toasting step (v) where temperatures of approximately 180 to 220 °C may be used and the product may be dried to a moisture content of 3.5 wt % or less. Accordingly the composition should be treated with asparaginase prior to step (v) and it is preferable that it is treated with asparaginase early in the process, for example between steps (ii) and (iii).

This method may result in a reduction in the asparagine content of the whole grain composition of at least 10 % or more preferably at least 20 %, 30 %, 40 %, 50 %, 60 %, 70 %, 80 %, 90 % , 95 % or 99 %, as compared to the same whole grain composition that has not undergone the asparaginase treatment. Further, it may result in a reduction in the acrylamide content of the whole grain breakfast cereal of at least 10 % or more preferably at least 20 %, 30 %, 40 %, 50 %, 60 %, 70 %, 80 %, 90 % , 95 % or 99 %, as compared to the same whole grain breakfast cereal that has not undergone the asparaginase treatment.

In a further aspect the invention provides a whole grain food product, such as a whole grain breakfast cereal, having an acrylamide content of 60 % or less, or more preferably 50 % or less, 40 % or less, or 30 % or less, as compared to the same whole grain breakfast cereal that has not undergone the asparaginase treatment.

Asparagine content can be measured using a method based on ion exchange chromatography from a water soluble extract, as explained in the Examples.

Acrylamide content can be measured by LC-MS/MS and a suitable method for sample preparation and acrylamide measurement is described by Delatour et al. "Improved sample preparation to determine acrylamide in difficult matrixes such as chocolate powder, cocoa, and coffee by liquid chromatography tandem mass spectroscopy" J. Agric. Food Chem. (2004) 52:4625. This method is suitable for acrylamide measurement in cereals.

In a further aspect the invention provides a method for reducing the amount of acrylamide in a food composition comprising processed whole grains wherein the method comprises at least one heating step and further comprises treating the food composition prior to the heating step with asparaginase for a period of from 2 to 60 minutes at a moisture content of from 15 to 45 % by weight and a temperature of from 20 °C to 50 °C. Preferred features of this method are as described above. This method may result in a reduction in the acrylamide content of the food composition of at least 10 % or more preferably at least 20 %, 30 %, 40 %, 50 %, 60 %, 70 %, 80 %, 90 % , 95 % or 99 %, as compared to the same food composition that has not undergone the asparaginase treatment.

In a further aspect the invention provides a whole grain composition having an asparagine content of 0.001 % by weight or less, based on the weight of the composition. The whole grain composition is preferably a processed whole grain composition and may comprise, for example, milled whole grain flour or milled whole grain wheat flour having an asparagine content of 0.001 % by weight or less. Such whole grain compositions may be used in the production of various food products, for example breakfast cereals, cereal bars, granola bars, porridge, pap, infant cereals, pastry and bakery products such as bread, cake and biscuits, pasta, cereal-based beverages and many other food products, or pet food. It will be apparent to the skilled person that the whole grain composition having an asparagine content of 0.001 % by weight or less may be incorporated into the food product in the usual manner and that there are no special considerations.

## Examples

The following examples are illustrative of the products and methods of making the same falling within the scope of the present invention. They are not to be considered in any way limitative of the invention. Changes and modifications can be made with respect to the invention. That is, the skilled person will recognise many possible variations in these examples covering a wide range of compositions, ingredients, processing methods, and mixtures, and can adjust the naturally occurring levels of the compounds of the invention for a variety of applications.

### Example 1 - Short time asparaginase treatment of wholegrain flour

This example shows that asparaginase can be used to treat whole grain flour in order to lower its asparagine content. The experimental approach investigated the asparaginase treatment of wholegrain wheat flour for a window of process conditions that may be applicable to the commercial treatment of stabilized whole grain products.

### a) Raw materials used

- Asparaginase (PreventASe®, DSM)
- Whole grain wheat flour (Desgrange, France)

### b) Sample preparation

Enzymatic experiments were performed at a laboratory scale using a Stephan Mixer equipped with heated jacket and external temperature control. 500 g sample of whole grain wheat flour was mixed with an aqueous asparaginase solution at a concentration of 50 ppm at a speed of 100 rpm for 10 min. The experimental design investigated the asparaginase treatment at a total product moisture content of 20 and 45 % by weight and product temperature of 20 and 50 °C. After the asparaginase treatment, samples were dried in an oven at 140 °C. The heat treatment was used to de-activate the enzyme and, subsequently, dry the samples to less than 10 % moisture. Table 1 in section d) below summarises experimental design and corresponding results.

### c) Analysis

Samples were analyzed for free asparagine content (Nestle method reference LI00.562-1) by Nestle Nunspeet, Netherlands using a method based on ion exchange chromatography from a water soluble extract.
2.0 g of ground sample is extracted for 2 min in 25 ml of deionized water at 40 °C using a Polyron type homogenizer. The slurry is transferred into a 50 ml volumetric flask and brought to volume with deionized water. The solution is sonicated for 10 min and centrifuged for 20 min at 3000 x g.
The supernatent is filtered on a folded paper filter and diluted 1 : 1 with 20 mmol/l hydrochloric acid (HCl). The diluted filtrate is then filtered again through 0.22 micrometer membrane prior to analysis.
The prepared solution is analyzed via ion exchange chromatography and detected via post column derivatization with ninhydrin by measuring absorbance at 570 nm. Quantification of asparagine levels was performed by comparison with external standards.

### d) Experimental results

Table 1 below shows the experimental design used to investigate the efficiency of asparaginase within a range of process conditions that may be applicable to commercial processing of heat treated stabilised whole grain wheat flour. The initial asparagine content of the whole grain wheat flour used for all the experiments was measured at 0.037 %.

**Table 1: Design experiment of asparaginase treatment (50 ppm, 10 min mixing time; 100 rpm) of whole grain wheat flour and final asparagine content measured (%) in enzymatically treated whole grain wheat flour.**

| Moisture content (%) | Temperature (°C) | Final asparagine content of whole grain wheat flour (% by total weight) |
|---|---|---|
| 20 | 20 | <0.001 |

(continued)

| Moisture content (%) | Temperature (°C) | Final asparagine content of whole grain wheat flour (% by total weight) |
|---|---|---|
| 20 | 50 | <0.001 |
| 45 | 20 | 0.002 |
| 45 | 50 | 0.001 |

Whatever the range of moisture (20 or 45 %) investigated as well as temperature (20 or 50 °C) used for enzymatic treatment with asparaginase, the asparagine content of whole grain wheat flour was significantly reduced.

### e) Conclusion

This example demonstrates that asparaginase can be used in whole grain flour pretreatments, performed at very short processing time, to produce whole grain wheat flour low in asparagine. The range of process conditions, in particular the short processing time at limited moisture content, may allow an easy interpretation of such treatment in commercial process designs for stabilized whole grain product. "Short processing time-limited moisture" heat treatments are for example performed in continuous process design. An asparaginase treatment of whole grain flour at a raw material producer stage, in this case the whole grain flour dry miller, would avoid its implementation downstream in food industry production facilities. Such strategy may enhance the flexibility of using such treatment efficiently in the food industry.

### Example 2 - Short time asparaginase treatment of wholegrain flour in breakfast cereal processing

#### a) Raw materials used

- Asparaginase (PreventASe®, DSM)
- Whole grain wheat flour (Desgrange, France)

#### b) Sample preparation

Experiments were performed at a laboratory scale using a Stephan Mixer equipped with heated jacket and external temperature control. 500 g sample of whole grain wheat flour was mixed with asparaginase at a concentration ranging from 10 to 100 ppm at a speed of 100 rpm. Experiments were designed to cover process parameters used in breakfast cereals manufacture. The experimental design investigated mixing times of 10, 25 or 40 min as well as product moisture contents adjusted at 20 %, 32.5 % or 45 % and product temperatures of 20, 35 and 50 °C. After mixing, samples were dried in an oven at 140 °C. The heat treatment was used to de-activate the enzyme and, subsequently, dry the samples to less than 10 % moisture. Table 2 in section d) below summarises experimental design and corresponding results.

#### c) Analysis

Samples were analyzed for free asparagine content (Nestle method reference LI00.562-1) by Nestle Nunspeet, Netherlands, as mentioned above.

#### d) Experimental results

Table 2 below show the experimental design used to investigate the efficiency of asparaginase within the range of process conditions typically used for breakfast cereals.
The initial asparagine content of the whole grain wheat flour used for all the experiments was measured at 0.037 %.

**Table 2: Design experiment of asparaginase treatment of whole grain wheat flour covering breakfast cereal's process conditions and final asparagine content measured (%) in enzymatically treated whole grain wheat flour.**

| Asparaginase concentration (ppm) | Moisture content (%) | Temperature (°C) | Mixing time (min) | Final asparagine content of whole grain wheat flour (% by total weight) |
|---|---|---|---|---|
| 10 | 32.5 | 35 | 25 | 0.002 |
| | 20 | 20 | 40 | 0.004 |
| | 45 | 50 | 40 | <0.001 |
| | | | | |
| 50 | 20 | 20 | 10 | <0.001 |
| | 20 | 50 | 10 | <0.001 |
| | 45 | 20 | 10 | 0.002 |
| | 45 | 50 | 10 | 0.001 |
| | 32.5 | 35 | 20 | 0.001 |
| | 20 | 20 | 40 | <0.001 |
| | 20 | 50 | 40 | <0.001 |
| | 45 | 20 | 40 | 0.001 |
| | 45 | 50 | 40 | <0.001 |
| | | | | |
| 100 | 32.5 | 35 | 25 | 0.001 |

The asparagine content of whole grain wheat flour was significantly reduced after asparaginase treatment in all scenarios investigated that is typically used in the production of breakfast cereals.

**e) Conclusion**

This example demonstrates that the window of process conditions (50 ppm asparaginase, 10 min treatment at a product moisture content of 20 % to 45 %) investigated in example 1) may also be applicable to commercial breakfast cereals process conditions.

The range of concentrations, temperatures and moistures investigated, where asparaginase still show effectiveness, allow some more flexibility at the breakfast cereals manufacturing scale, however this can involve longer mixing time.

**Example 3 - Short time asparaginase treatment of wholegrain composition with different particles size**

This example aims to show that asparagine can be use in pre-treatment of whole grain compositions with different particles size.

**a) Raw materials used**

- Asparaginase (PreventASe®, DSM)
- Whole grain wheat flour (Desgrange, France, average particles size ~ 230 microns)
- Cracked wheat, produced from whole kernels in CPW pilot plant facilities (average particle size ~2.5 mm)

**b) Sample preparation**

Experiments were performed at a laboratory scale using a Stephan Mixer equipped with heated jacket and external temperature control. 500 g sample of whole grain wheat flour and whole grain cracked wheat were mixed for 25 min with an aqueous asparaginase solution at a concentration of 10 ppm and 100 ppm for the whole grain wheat flour, 50 and 100 ppm for the whole grain cracked wheat, all at a mixer speed of 100 rpm. The product moisture was adjusted to approximately 35% and the product temperature was held at 35°C for whole grain wheat flour systems, and at 20 °C for the whole grain cracked wheat systems. After mixing, samples were dried in an oven at 140 °C. The heat treatment was used to de-activate the enzyme and, subsequently, dry the samples to less than 10 % moisture. Table 3 in section d) below summarises experimental design and corresponding results.

**c) Analysis**

Samples were analyzed for free asparagine content (Nestle method reference LI00.562-1) by Nestle Nunspeet, Netherlands. See above.

**d) Experimental results**

Table 3: Design experiment of asparaginase treatment of whole grain wheat flour and whole grain cracked wheat and final asparagine content measured (%) in enzymatically treated whole grain compositions.

| Sample nature | Asparaginase concentration (ppm) | Asparagine measured after treatment (% by total weight) |
|---|---|---|
| Whole grain wheat flour | 0 | 0.037 |
| | 50 | 0.002 |
| | 100 | 0.001 |
| | | |
| Whole grain cracked wheat | 0 | 0.026 |
| | 50 | <0.001 |
| | 100 | <0.001 |

**e) Conclusion**

This example demonstrates that asparaginase can be used to reduce asparagine content of whole grain compositions with different particle sizes. Whole grain wheat flour represents a small particle size distribution (average -230 microns) and cracked wheat represents a large particle size composition (average ~2.5 mm). Further, the milling processes used for these two compositions are different in energy introduced into the wheat, consequently, the flour has a more open fibre cell structure (easier access to asparagine) whereas the fibre cell structure in cracked wheat is much more intact. Despite this difference, the asparaginase treatment was effective for both compositions.

**Example 4 - Short time asparaginase treatment of whole wheat kernels composition as is and pre-cooked**

This example aims to illustrate that asparaginase is effective for pre-treatment of pre-cooked but not of uncooked intact whole grain wheat kernels.

**a) Raw materials used**

- Asparaginase (PreventASe®, DSM)
- Whole wheat kernels (Heygates,UK)
- Whole wheat kernels (Heygates, UK), cooked for 35 min at 40 % moisture and temperature of 110 to 120 °C.

**b) Sample preparation**

Experiments were performed at a laboratory scale using a Stephan Mixer equipped with heated jacket and external temperature control. 500 g sample of whole wheat kernels as is (raw) and whole wheat kernels pre-cooked were mixed 25 min with asparaginase at a concentration of 50 and 100 ppm at a speed of 100 rpm. The product moisture was adjusted to 35 % and the product temperature was held at 20 °C. After mixing, samples were dried in an oven at 140 °C. The heat treatment was used to de-activate the enzyme and, subsequently, dry the samples to less than 10 % moisture. Table 4 in section d) below summarises experimental design and corresponding results.

**c) Analysis**

Samples were analyzed for free asparagine content (Nestle method reference LI00.562-1) by Nestle Nunspeet, Netherlands. See above.

**d) Experimental results**

Table 4: Design experiment of asparaginase treatment of whole wheat kernels as is and pre-cooked whole wheat kernels and final asparagine content measured (%) in enzymatically treated whole grain compositions.

| Sample nature | Asparaginase concentration (ppm) | Asparagine measured after treatment (% by total weight) |
|---|---|---|
| Whole grain kernel as is | 0 | 0.035 |
| | 50 | 0.031 |
| | 100 | 0.029 |
| | | |
| Pre-cooked wheat kernel | 0 | 0.029 |
| | 50 | <0.001 |
| | 100 | <0.001 |

Treatment of pre-cooked wheat kernels with asparaginase for 25 minutes at moisture of 35 % allows a significant asparagine reduction. No significant reduction of asparagine was observed when a similar treatment was conducted on raw wheat kernels.

**e) Conclusion**

This example shows efficiency of asparaginase on pre-cooked whole wheat kernels but not on uncooked compositions. This underlines that the asparaginase treatment, as described in this invention, can be performed on processed whole grain compositions. In this particular example, pre-processing was done using a cooking treatment. This process step increased accessibility of asparagine by the asparaginase enzyme.

**Example 5 - Scale-up of short time asparaginase treatment to whole grain breakfast cereals at pilot scale: Asparagine after cooking**

This example aims to show that the asparaginase treatment can be applied to whole grain breakfast cereals applications.

**a) Raw materials used**

- Asparaginase (PreventASe®, DSM)
- Milled whole grain wheat (Silvery Tweed, UK)
- Wheat flour type 55 (Heygates, UK)

- Malt extract (Muntons, UK)

**b) Sample preparation**

Batch cooking process typically involves a cooking step of wet and dry ingredients, then a forming stage of the dough into flakes and toasting of flakes. Although one could consider various "asparaginase treatment integration strategies" within the breakfast cereal process, it is desirable to have the treatment as early as possible in the process. This particular experiment investigated an asparaginase treatment prior to the batch cooking step. Many batch cooker designs have limitations with respect to mixing. Therefore, in this experiment we integrated a mixing step to ensure uniform distribution of the asparaginase within the mix prior to batch cooking.

Experiments were performed at pilot scale using an additional mixing step (using a twin shaft fluidising mixer) to the cooking step using a pressure rotary cooker. Experimental batches were representative of a wheat flakes basic recipe and made of 74 % wet basis whole milled wheat, 8.6 % wet basis refined wheat flour, 1.8 % malt extract and 15.6 % water. Enzyme was dissolved in the liquid slurry (water at -40 °C and malt) and added to the dry whole grain milled wheat and refined wheat flour mix. The experiment investigated an asparaginase treatment at 100, 500 and 1000 ppm for 10 minutes mixing time (using fluidising twin shaft mixer). After the asparaginase treatment step, the premix was transferred instantaneously to a rotary batch cooker. Steam was injected into the cooker and until the product temperature increased to approximately 125 °C and the steam pressure inside the cooker increased to 20 psi. One can assume that the asparaginase in the product was inactivated at this stage. Asparagine was analysed after batch cooking. Figure 1 in section d) below summarises the experimental design and corresponding results.

**c) Analysis**

Samples were analyzed for free asparagine content (Nestle method reference LI00.562-1) by Nestle Nunspeet, Netherlands. See above

**d) Experimental results**

This series of pilot scale tests aimed to simulate commercial conditions for the manufacture of batch cooked breakfast cereals. In accordance with prior laboratory scale results shown in examples 1 and 2, the asparaginase treatment was performed for 10 min and integrated into the process flow prior to the batch cooking step. Figure 1 shows asparagine remaining in the cooked whole grain wheat dough. The treatment with 100 ppm asparaginase resulted in an asparagine reduction of 42 % in the cooked dough when compared to the product without asparaginase treatment. The treatment with 500 ppm asparaginase resulted in a 50 % reduction in asparagine in the cooked dough. For an asparaginase treatment at 1000 ppm, asparagine reduction was of 54.2 %.

**e) Conclusion**

This example shows that a short time asparaginase treatment, integrated into a pilot scale breakfast cereal batch cooking process, reduces the amount of asparagine in a whole grain wheat breakfast cereal product. In this particular case, the asparaginase treatment was performed on the whole breakfast cereal mix, containing the milled whole grain wheat composition, prior to batch cooking. The example also recognizes a difference in asparaginase efficiency between laboratory scale model system and commercial breakfast cereal processing at pilot scale.

**Example 6 - Scale-up of short time asparaginase treatment to whole grain breakfast cereals at pilot scale: acrylamide in end product**

This example aims to demonstrate that a short time pre-treatment of whole grain and refined wheat premix with asparaginase achieving low asparagine breakfast cereal cooked dough can impact the final acrylamide content of commercial finished product breakfast cereals.

**a) Raw materials used**

(as per example 5)

**b) Sample preparation**

(as per example 5). The cooked cereal dough was then formed into flakes and toasted under standard processing parameters. Flakes were dried and toasted in the pilot plant jet zone at a temperature profile in zone 1 of 205 °C and in zone 2 of 195 °C. Figure 2 in section d) below summarises experimental design and corresponding results.

**c) Analysis**

Samples were analyzed for acrylamide and moisture content (Nestle method reference QP/LC acrylamide (01/07 P-QPH.020)) by Nestle Weiding, Germany. Acrylamide content was measured by LC-MS/MS as described by Delatour et al. "Improved sample preparation to determine acrylamide in difficult matrixes such as chocolate powder, cocoa, and coffee by liquid chromatography tandem mass spectroscopy" J. Agric. Food Chem. (2004) 52:4625.

Moisture content was measured by a method based on water evaporation by oven drying. 5 g sample is placed in oven at 130 °C for 1 hour. The moisture content of the sample is determined by measuring the mass of the sample before and after the water is removed by evaporation:

$$\% \text{ Moisture} = \frac{\text{Initial Sample Weight - Final Sample Weight}}{\text{Initial Sample Weight}} \times 100$$

**d) Experimental results**

Figure 2 shows the acrylamide content in batch cooked and toasted whole grain wheat flakes, prepared as described in examples 5 and 6.

The treatment with 100 ppm asparaginase reduced asparagine in the cooked dough by 42 % (example 5) and acrylamide in the toasted whole grain wheat flakes by 44.5 %. Further, the treatment with 1000 ppm asparaginase reduced asparagine content in the cooked dough by 54 % (example 5) and acrylamide content in the toasted whole grain wheat flakes by 47.3 %.

**e) Conclusion**

This example shows that an asparaginase treatment of a whole grain wheat formula, performed as described in example 5, resulted in a reduction in acrylamide in the finished breakfast cereal. Further, the data indicate that the correlation between asparagine reduction in the raw material used for breakfast cereal processing and acrylamide reduction in the finished product may not follow a linear relationship and may be impacted by other complex factors.

**Claims**

1. A method for reducing the amount of asparagine in a processed whole grain composition comprising treating the composition with asparaginase for a period of from 2 to 60 minutes at a moisture content of from 15 to 45 % by weight and a temperature of from 20 °C to 50 °C.

2. A method for producing a whole grain food product comprising the steps of:

    (i) Providing a composition comprising processed whole grain and optionally other solid ingredients;
    (ii) Treating the composition with asparaginase for a period of from 2 to 60 minutes at a moisture content of from 15 to 45 % by weight and a temperature of from 20 °C to 50 °C; and
    (iii) Heating or cooking the composition.

3. A method for producing a whole grain breakfast cereal comprising the steps of:

    (i) Providing a composition comprising processed whole grain and optionally other solid ingredients;
    (ii) Mixing liquid into the composition of step (i) to achieve a moisture content of from 15 to 45 % by weight;
    (iii) Cooking the composition;
    (iv) Forming the composition into pieces;
    (v) Drying and toasting the pieces;
    (vi) Optionally coating the pieces;
    wherein the method further comprises:

(vii) Treating the composition with asparaginase for a period of from 2 to 60 minutes at a moisture content of from 15 to 45 % by weight and a temperature of from 20 °C to 50 °C;
and wherein step (vii) is carried out prior to step (v) and preferably between steps (ii) and (iii).

**4.** A method according to any preceding claim wherein the processed whole grain composition comprises milled whole grain wheat flour.

**5.** A method according to any preceding claim wherein the moisture content is less than 35 %, preferably about 20 %.

**6.** A method according to any preceding claim wherein the treatment time is from 10 to 20 minutes.

**7.** Whole grain composition having an asparagine content of 0.001 % by weight or less, based on the weight of the composition.

**8.** Whole grain composition according to claim 7 which is a processed whole grain composition.

**9.** Whole grain composition according to claim 7 or 8 which comprises milled whole grain flour, preferably milled whole grain wheat flour.

**10.** Use of a whole grain composition according to any of claims 7 to 9 in the production of breakfast cereals, cereal bars, pastry and bakery products such as bread, cake and biscuits, pasta, cereal-based beverages, or pet food.

**11.** Food product comprising a whole grain composition according to any of claims 7 to 9.

**12.** Whole grain food product having an acrylamide content of 60 % or less, as compared to the same whole grain food product that has not undergone the asparaginase treatment.

**13.** Whole grain food product according to claim 12 which is a whole grain breakfast cereal.

**14.** Method for reducing the amount of acrylamide in a food composition comprising processed whole grains wherein the method comprises at least one heating step and further comprises treating the food composition prior to the heating step with asparaginase for a period of from 2 to 60 minutes at a moisture content of from 15 to 45 % by weight and a temperature of from 20 °C to 50 °C.

**15.** Whole grain composition or food product obtainable by the method of any of claims 1 to 6 or 14.

Fig. 1

Fig. 2

Europäisches
Patentamt

European
Patent Office

Office européen
des brevets

## EUROPEAN SEARCH REPORT

Application Number

EP 08 16 6394

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2006/128843 A (DSM IP ASSETS BV [NL]; DE BOER LEX [NL]) 7 December 2006 (2006-12-07) * page 1, paragraph 1 * * page 2, paragraphs 2,3 * * page 3, last paragraph - page 4, paragraph 3 * * examples 2,3 * | 1-15 | INV. A23L1/015 A23L1/164 |
| X | US 2008/096260 A1 (BUDOLFSEN GITTE [DK] ET AL) 24 April 2008 (2008-04-24) * paragraphs [0002], [0014], [0015], [0023], [0026] * * examples 4,5 * | 1-15 | |
| X | US 2005/214411 A1 (LINDSAY ROBERT C [US] ET AL) 29 September 2005 (2005-09-29) * paragraphs [0001], [0008], [0014], [0016] * * example 4 * | 12,13 1-11,14, 15 | |
| X A | US 2004/058046 A1 (ZYZAK DAVID VINCENT [US] ET AL) 25 March 2004 (2004-03-25) * paragraphs [0021], [0040], [0041], [0051], [0056] * | 12,13 1-11,14, 15 | TECHNICAL FIELDS SEARCHED (IPC) A23L |
| A | WO 2007/077545 A (PROCTER & GAMBLE [US]; CORRIGAN PATRICK JOSEPH [US]) 12 July 2007 (2007-07-12) * page 3, line 10 - page 8, line 8 * | 1-15 | |
| A | US 2007/292583 A1 (HAYNES LYNN C [US] ET AL) 20 December 2007 (2007-12-20) * paragraphs [0018], [0020], [0053], [0054] * | 1-15 | |

The present search report has been drawn up for all claims

| Place of search | Date of completion of the search | Examiner |
|---|---|---|
| The Hague | 25 March 2009 | Hartlieb, Ariane |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 08 16 6394

This annex lists the patent family members relating to the patent documents cited in the above-mentioned European search report.
The members are as contained in the European Patent Office EDP file on
The European Patent Office is in no way liable for these particulars which are merely given for the purpose of information.

25-03-2009

| Patent document cited in search report | | Publication date | Patent family member(s) | | Publication date |
|---|---|---|---|---|---|
| WO 2006128843 | A | 07-12-2006 | AR | 053395 A1 | 02-05-2007 |
| | | | AU | 2006254206 A1 | 07-12-2006 |
| | | | CA | 2608502 A1 | 07-12-2006 |
| | | | CN | 101189330 A | 28-05-2008 |
| | | | JP | 2008541747 T | 27-11-2008 |
| US 2008096260 | A1 | 24-04-2008 | NONE | | |
| US 2005214411 | A1 | 29-09-2005 | NONE | | |
| US 2004058046 | A1 | 25-03-2004 | US | 2005202153 A1 | 15-09-2005 |
| WO 2007077545 | A | 12-07-2007 | AR | 058935 A1 | 05-03-2008 |
| | | | AU | 2007203950 A1 | 12-07-2007 |
| | | | CA | 2636220 A1 | 12-07-2007 |
| | | | CN | 101365340 A | 11-02-2009 |
| | | | EP | 1968389 A1 | 17-09-2008 |
| US 2007292583 | A1 | 20-12-2007 | AR | 061498 A1 | 03-09-2008 |
| | | | AU | 2007261522 A1 | 27-12-2007 |
| | | | EP | 2028942 A1 | 04-03-2009 |
| | | | WO | 2007149320 A1 | 27-12-2007 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2004030468 A
- WO 2005004628 A
- WO 2004032648 A
- WO 03083043 A

**Non-patent literature cited in the description**

- **Mottram et al.** *Nature,* 2002, vol. 419, 448-449
- **Stadler et al.** *Nature,* 2002, vol. 419, 449-450
- **Delatour et al.** Improved sample preparation to determine acrylamide in difficult matrixes such as chocolate powder, cocoa, and coffee by liquid chromatography tandem mass spectroscopy. *J. Agric. Food Chem.,* 2004, vol. 52, 4625